(19) Europäisches Patentamt / European Patent Office / Office européen des brevets

(11) **EP 3 296 770 A1**

(12) **EUROPEAN PATENT APPLICATION**

(43) Date of publication:
**21.03.2018 Bulletin 2018/12**

(51) Int Cl.:
**G01T 3/00** (2006.01)

(21) Application number: **17190833.8**

(22) Date of filing: **13.09.2017**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **20.09.2016 CN 201610835790**

(71) Applicants:
• **Tsinghua University**
  **Beijing 100084 (CN)**
• **Nuctech Company Limited**
  **TongFang Building,**
  **Shuangqinglu,**
  **Haidian District**
  **Beijing 100084 (CN)**

(72) Inventors:
• **YANG, Yigang**
  **Beijing 100084 (CN)**
• **LI, Yuanjing**
  **Beijing 100084 (CN)**
• **WANG, Xuewu**
  **Beijing 100084 (CN)**
• **ZHANG, Zhi**
  **Beijing 100084 (CN)**

(74) Representative: **Gunzelmann, Rainer**
  **Wuesthoff & Wuesthoff**
  **Patentanwälte PartG mbB**
  **Schweigerstraße 2**
  **81541 München (DE)**

(54) **NEUTRON GENERATION APPARATUSES, NEUTRON IMAGING DEVICES AND IMAGING METHODS**

(57) A neutron generation apparatus, a neutron imaging device and an imaging method are disclosed. The neutron imaging device includes a neutron generation apparatus for generating a continuous energy spectrum neutron beam; a neutron detector for receiving a neutron beam which penetrates an object being inspected to obtain an electrical signal; a data collection circuit coupled to the neutron detector, for converting the electrical signal into a digital signal; and a data processing apparatus coupled to the data acquisition circuit, for obtaining images of the object being inspected under neutrons of different energy spectrums based on the digital signal. The above technical solutions may be utilized to generate the continuous energy spectrum neutron beam so that the images of the object being inspected under the neutrons of different energy spectrums may be obtained by the time-of-flight method, improving sensitivity of the detection.

FIG. 1

**Description**

**TECHNICAL FIELD**

The present disclosure relates to a neutron source, in particular to devices for generating energy-distinguished neutrons, and methods of imaging with the generated energy-distinguished neutrons.

**BACKGROUND**

A neutron imaging technology is an important non-destructive detection technology, which can play a huge role in aero-engine's hollow turbine blade detection, moisture distribution detection in a fuel cell, and other applications. In order to achieve neutron imaging, a high-current neutron source with a higher neutron yield is required.

At present, high-current neutron sources are reactors or spallation neutron sources. They have very high neutron yields and neutron fluence rates. However, such kinds of neutron sources have very high construction cost (~ 1 billion CNYs), thus cannot be built in general scientific research and production institutes, and have expensive operation cost and a valuable beam time, which are difficult to meet requirements of the general scientific research or production institutes or other institutes which have confidentiality demands on analyzed samples.

In addition, more detail information is needed in neutron imaging analysis on objects such as aero-engine hollow turbine blades.

**SUMMARY**

In view of one or more of problems in the prior art, devices for generating neutrons with a continuous energy spectrum, imaging devices and imaging methods thereof are provided.

According to an aspect of the present disclosure, a neutron imaging device is provided. The device includes a neutron generation apparatus configured to generate a continuous energy spectrum neutron beam; a neutron detector configured to receive a neutron beam which penetrates an object being inspected to obtain an electrical signal; a data collection circuit coupled to the neutron detector and configured to convert the electrical signal into a digital signal; and a data processing apparatus coupled to the data acquisition circuit and configured to obtain images of the object being inspected under neutrons of different energy spectrums based on the digital signal.

According to some embodiments, the neutron generation apparatus includes a high-energy electron linear accelerator configured to generate an X-ray; a neutron conversion target which is bombarded by the X-ray to generate a neutron beam; a filter arranged downstream of the neutron conversion target and configured to filter the X-ray included in the neutron beam and generate the continuous energy spectrum neutron beam; and a collimator arranged downstream of the filter and configured to collate the filtered neutron beam so as to generate the continuous energy spectrum neutron beam which is emitted in one direction.

According to some embodiments, the neutron generation apparatus further includes a moderating reflector configured to surrounding at least partly the neutron conversion target so that neutrons generated by the neutron conversion target are emitted in one direction.

According to some embodiments, the data processing apparatus is further configured to obtain the images of the object being inspected under the neutrons of different energy spectrums based on a time-of-flight method, with a time at which a pulse X-ray is generated by the high-energy electron linear accelerator being used as a reference.

According to some embodiments, the neutron detector includes a neutron-sensitive micro-channel plate detector.

According to some embodiments, the filter includes material having a smaller cross section for neutrons and a larger cross section for photons.

According to some embodiments, the filter particularly includes beryllium or lead.

According to some embodiments, the neutron conversion target includes heavy water.

According to some embodiments, the TIME OF FLIGHT of the neutrons of different energy spectrums is calculated according to a formula below:

$$t = \frac{L}{\sqrt{2E_n / m_n}}$$

where L denotes a distance of flight, $E_n$ denotes an energy level of neutron, and $m_n$ denotes a rest mass of neutron.

According to some embodiments, the neutron collimator is evacuated.

According to another aspect of the present disclosure, an imaging method is provided. The method includes the steps of: generating a continuous energy spectrum neutron beam by the device as previously described; receiving, by a neutron detector, the neutron beam which penetrates an object being inspected to obtain an electrical signal; converting the electrical signal into a digital signal; and obtaining images of the object being inspected under neutrons of different energy spectrums based on the digital signal.

According to yet another aspect of the present disclosure, a neutron generation apparatus is provided. The apparatus includes a high-energy electron linear accelerator configured to generate an X-ray; a neutron conversion target which is bombarded by the X-ray to generate a neutron beam; a filter arranged downstream of the neutron conversion target and configured to filter the X-ray included in the neutron beam and generate the continuous energy spectrum neutron beam; and a collimator arranged downstream of the filter and configured to collate the filtered neutron beam to generate the continuous energy spectrum neutron beam which is emitted in one direction.

According to some embodiments, the neutron generation apparatus further includes a moderating reflector configured to surrounding at least partly the neutron conversion target so that neutrons generated by the neutron conversion target are emitted in one direction.

According to some embodiments, the filter comprises material having a smaller cross section for neutrons and a larger cross section for photons.

The above technical solutions may be utilized to generate the continuous energy spectrum neutron beam so that the images of the object being inspected under the neutrons of different energy spectrums may be obtained by the time-of-flight method, improving sensitivity of the detection.

## BRIEF DESCRIPTION OF THE DRAWINGS

In order to better understand the present disclosure, embodiments of the present disclosure will be described according to the accompanying drawings, in which

Fig. 1 shows a schematic structure diagram of a neutron imaging device according to an embodiment of the present disclosure;

Fig. 2 shows a schematic structure diagram and an operation process of a neutron detector in a neutron generation apparatus according to an embodiment of the present disclosure;

Fig. 3 shows a schematic diagram depicting arrival times of neutrons with different energy levels according to an embodiment of the present disclosure;

Fig. 4 shows a schematic block diagram of a data processing apparatus according to an embodiment of the present disclosure; and

Fig. 5 shows a graph depicting neutron absorption macroscopic cross sections of a hollow turbine blade and a core.

Not all of circuits and structures of the embodiments are shown in the drawings. Throughout the drawings, same reference numerals refer to same or similar components or features.

## DETAILED DESCRIPTION

Hereinafter, particular embodiments of the present disclosure will be described in detail, and it should be noted that the embodiments described herein are for illustrative purposes only but not intended to limit the present disclosure. In the following description, numerous specific details are set forth in order to provide a thorough understanding of the present disclosure. It will be apparent, however, to the skilled in the art that the present disclosure needs not be practiced with these specific details. In other instances, well-known circuits, materials, or methods are not specifically described in order to avoid obscuring the present disclosure.

Throughout the specification, reference to "an embodiment", "embodiment", "an example" or "example" means that a particular feature, structure, or characteristic described in connection with the embodiment or example is included in at least one embodiment of the present disclosure. Therefore, the phrase "in one embodiment", "in an embodiment", "an example" or "example" throughout the specification does not necessarily refer to the same embodiment or example. In addition, specific features, structures, or characteristics may be combined in one or more embodiments or examples in any suitable combination and/or sub-combination. In addition, it will be understood by the skilled in the art that the drawings provided herein are for the purpose of illustration and that the drawings are not necessarily drawn in scale. The term "and/or" used herein includes any and all combinations of one or more of the items as listed.

For the problems in the prior art, the embodiments of the present disclosure provide an apparatus for generating continuous energy spectrum neutrons, wherein a high-energy electron linear accelerator generates an X-ray, which bombards a neutron conversion target to obtain a neutron beam. Then a filter is arranged to filter the X-ray mixed in the neutron beam to obtain the continuous energy spectrum neutron beam. And the filtered neutron beams are collated to obtain the continuous energy spectrum neutron beam which is emitted in one direction. According to other embodiments, with a time at which a pulsed X-ray is generated by the high-energy electron linear accelerator being used as a reference, the images of the object being inspected under the neutrons of different energy spectrums may be obtained based on the time-of-flight method, so as to improve detection sensitivity of the object being inspected. For example, the neutron beam penetrating the object being inspected, such as a turbine blade, is received by the neutron detector to obtain the electrical signal. The data collection circuit converts the electrical signal into the digital signal, so that the data processing device, such as a computer, obtains the images of the object being inspected under the neutrons of different energy spectrums based on the digital signal.

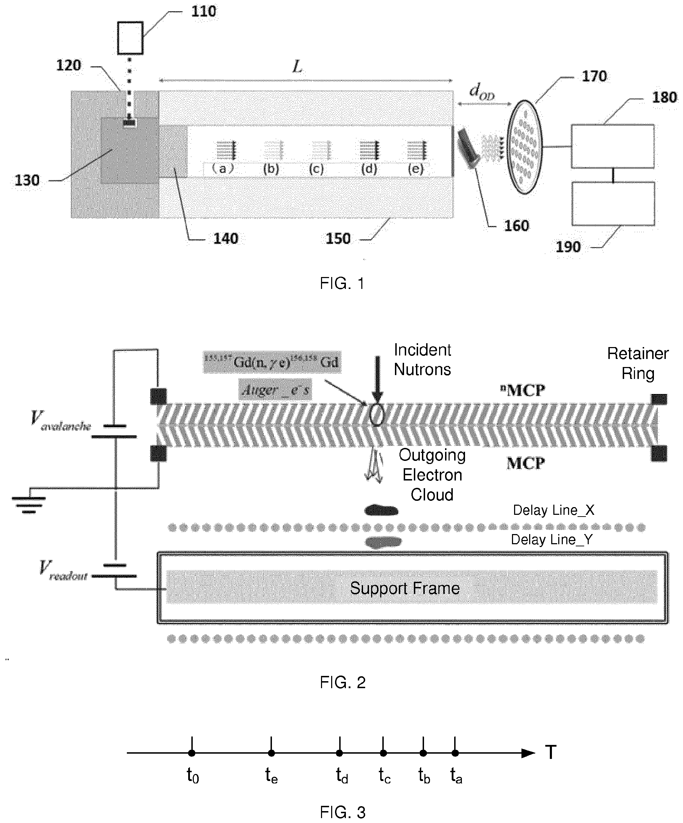

Fig. 1 shows a schematic structure diagram of an imaging device according to an embodiment of the present disclosure. As shown in Fig. 1, the device according to the embodiment of the present disclosure includes a high-energy electron linear accelerator 110, a neutron conversion target 130, a moderating reflector 120, a filter 140, a neutron collimator 150, a neutron detector 170, a data collection circuit 180 and a data processing apparatus 190. According to some embodiments of the present disclosure, an object 160 being inspected, such as an aerodynamic turbine blade, is detected by the resulting continuous energy spectrum neutrons to obtain images under the neutrons of different energy levels, improving the sensitivity of the detection.

As shown in Fig. 1, X-rays are generated using the high-energy electron linear accelerator 110 (e.g., 10 MeV electrons), and the X-rays perform $(\gamma, n)$ reaction with the neutron conversion target 130 (e.g., heavy water $D_2O$) to generate the neutrons. After being slowed down and reflected by the moderating reflector 120, the neutrons are emitted out towards the right side as shown in Fig. 1. Since the neutrons and the X-rays are generated almost simultaneously and the X-rays are an interference source for the detector of the system, the X-rays may be filtered out. The filter (also referred to as a filtering body) 140 may be made of a material having a smaller cross section for the neutrons and a larger cross section for photons, and Bi and Pb are more preferred materials. After photon filtering is performed, the neutrons enter the neutron collimator 150, and the neutron collimator 150 selects the neutrons in a particular direction for emitting towards the detector, while the neutrons in other directions are shielded. In some embodiments, since a distance of flight L is generally longer, the neutron collimator should be evacuated.

The neutrons generated by the $(\gamma, n)$ reaction are fast neutrons. After the neutron conversion target 130 and the moderating reflector 120 are applied, energy of a part of neutrons will be reduced. Therefore, after penetrating the filtering body 140, the energy of the neutrons will appear as a continuous distribution. Since the electron accelerator is a pulse source, the neutrons will also be emitted out at pulses. In general, it is the continuous energy spectrum neutrons with a pulse structure in time that penetrate the filtering body 140. The neutrons with higher energy have a faster velocity of flight, while the neutrons with lower energy have a slower velocity of flight, which lead to different times for them to arrive at the detector, as shown in a formula (1) below, where L denotes the a distance of flight, $E_n$ denotes an energy of neutron, and $m_n$ denotes a rest mass of neutron. In view of the fact that a distance $d_{OD}$ between the object being inspected and the neutron detector 170 is much less than the distance L between the neutron conversion target and the object being inspected, influence of $d_{OD}$ is ignored in the formula (1) below.

$$t = \frac{L}{\sqrt{2E_n / m_n}} \tag{1}$$

Different energy levels of the different neutron beams result in respective times of flight of the neutron beams over the same distance. As shown in Fig. 1, Neutrons (a), Neutrons (b), Neutrons (c), Neutrons (d) and Neutrons (e) are shown based on different energy levels of the neutrons; and the velocity of flight of Neutrons (A) is less than that of Neutrons (b), the velocity of flight of Neutrons (b) is less than that of Neutrons (c), the velocity of flight of Neutrons (c) is less than that of Neutrons (d), and the velocity of flight of Neutrons (d) is less than that of Neutrons (e).

Fig. 2 is a schematic diagram of an imaging process according to an embodiment of the present disclosure. Fig. 2 shows a cross-section view of a neutron detector. The 170 neutron detector employed in the device according to the present embodiment may be a neutron-sensitive micro-channel plate detector, which is supported by a retainer ring, and can take requirements on neutron detection efficiency, a position resolution and a time resolution into account. A schematic diagram of a principle of measuring the neutrons by the neutron-sensitive micro-channel plate is shown in Fig. 2. The incident neutrons are absorbed in the neutron-sensitive micro-channel plate ($^n$MCP) to generate inner-conversion electrons. The inner-conversion electrons induce a multiplication process within the MCP, forming an electron cloud, and readout electrodes (e.g., a delay line_X and a delay line_Y arranged in a cross manner) analyze a position of the electron cloud, so as to obtain the amount, position and time information of the neutrons, which are collected and converted into a digital signal by the data collection circuit 180 as shown in Fig. 1, and images under the neutrons of different energy levels are displayed on a display of the data processing apparatus 190.

As such, the position information and the time information of the neutrons which penetrate the object being inspected are measured by the position and time sensitive neutron detector 170, the data collection circuit 180 coupled to the neutron detector 170, and the data processing apparatus 190 coupled to the data collection circuit 190. With a pulse instance of the high-energy electron linear accelerator being used as a time reference zero point, the energy of the neutrons are measured based on a time at which the neutrons arrive at the detector, and the images under the neutrons of different energies are stored respectively. For example, the neutron detector 170 receives the neutron beam that penetrates the object being inspected to obtain the electrical signal. The data collection circuit 180 is coupled to the neutron detector 170 to convert the electrical signal into the digital signal. The data processing apparatus 190, such as a computer, is coupled to the data collection circuit 180 to obtain the images of the object being inspected under the neutrons of different energies based on the digital signal. According to some embodiments, the data processing apparatus 190 obtains the images of the object being inspected under the neutrons of different energy spectrums based on the time-of-flight method, with a time at which a pulse X-ray is generated by the high-energy electron linear accelerator being used as a reference.

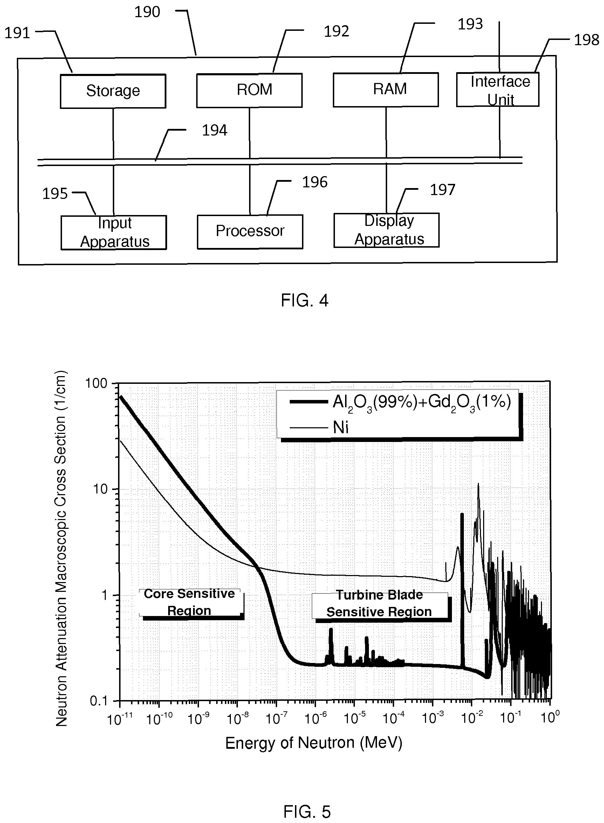

Fig. 3 shows a schematic diagram depicting arrival times of neutrons of different energies according to an embodiment of the present disclosure. As shown in Fig. 3, the high-energy linear electron accelerator pulse instance is the reference zero point $t_0$. Velocity differences between Neutron Beam (a), Neutron Beam (b), Neutron Beam (c), Neutron Beam (d) and Neutron Beam (E) result in distribution of their respective times of flight as shown in Fig. 4, i.e., the time of flight $t_e$ of Neutron Beam (e) is less than the time of flight $t_d$ of Neutron Beam (d), and $t_d$ is less than the time of flight $t_c$ of Neutron Beam (c), $t_c$ is less than the time of flight $t_b$ of Neutron Beam (b), $t_b$ is less than the time of flight $t_a$ of Neutron Beam (a). As such, image data under the neutron beams of the corresponding energies may be obtained by reading the data obtained by the neutron detector 170 for a specific period of time since the reference zero point t0.

Fig. 4 shows a schematic block diagram of the data processing apparatus 190 as shown in Fig. 1. As shown in Fig. 4, the data collected by the data collector is stored in a storage 191 through an interface unit 198 and a bus 194. A read-only memory (ROM) 192 stores configuration information and program of a data processor of a computer. A random access memory (RAM) 193 is used to temporarily store various data during operation of a processor 196. In addition, the storage 191 also stores computer program for performing data processing, such as programs for image processing and display etc. The internal bus 194 is connected to the storage 191, the read-only memory 192, the random access memory 193, an input apparatus 195, the processor 196, a display apparatus197, and the interface unit 198.

After the user has input an operation command by the input apparatus 195 such as a keyboard and a mouse, the processor 196 reads the neutron position information obtained by the neutron detector 170 within the specific period of time, and displays on the display apparatus 197 such as a LCD display or outputs a processing result directly in a form of a hard copy such as printing.

Fig. 5 shows a graph depicting neutron absorption macroscopic cross sections of a turbine blade and a residual core, which shows different characteristics thereof, i.e., the neutron cross section of the residual core is larger in a low energy neutron region, while the neutron cross section of the turbine blade is larger in a high energy region. In order to obtain a good detection capability of the residual core, the neutron energy selection capability of the system may be used to select the neutrons in the low energy region (0.3 eV or less) for residual core imaging, so as to detect the potential residual core. If the turbine blade needs to be imaged, the neutrons of the high energy region (0.3eV or more) may be selected for imaging. With such energy-distinguished neutron imaging technology, a better material discrimination capability may be obtained. In this way, when the residual core is detected by the neutron imaging, the imaging may be performed by selecting the optimized neutron energy region to obtain a higher residual core sensitivity.

Although the present disclosure has been explained in terms of checking the aero-engine blades as an example in the above embodiments, the skilled in the art will realize that the above embodiments may be used for other applications, such as battery inspection and the like.

While the present disclosure has been described with reference to several typical embodiments, it should be understood that the terms used here are illustrative and exemplary but not restrictive. Since the present disclosure can be embodied in many forms without departing from the spirit or substance of the present disclosure, it should be understood that the above-described embodiments are not limited to any of the foregoing details, but should be construed broadly within the spirit and scope of the present disclosure as defined by the appended claims. Thus, all variations and modifications that fall within the scope of the claims or the equivalents thereof are intended to be covered by the appended claims.

**Claims**

1. A neutron imaging device comprising:

a neutron generation apparatus configured to generate a continuous energy spectrum neutron beam;
a neutron detector configured to receive a neutron beam which penetrates an object being inspected to obtain an electrical signal;
a data collection circuit coupled to the neutron detector and configured tor convert the electrical signal into a digital signal; and
a data processing apparatus coupled to the data acquisition circuit and configured to obtain images of the object being inspected under neutrons of different energy spectrums based on the digital signal.

2. The neutron imaging device according to claim 1, wherein the neutron generation apparatus comprises:

a high-energy electron linear accelerator configured to generate an X-ray;
a neutron conversion target which is bombarded by the X-ray to generate a neutron beam;
a filter arranged downstream of the neutron conversion target and configured to filter the X-ray included in the neutron beam and generate the continuous energy spectrum neutron beam; and
a collimator arranged downstream of the filter and configured to collate the filtered neutron beam so as to generate the continuous energy spectrum neutron beam which is emitted in one direction.

3. The neutron imaging device according to claim 2, wherein the neutron generation apparatus further comprises:

a moderating reflector configured to surrounding at least partly the neutron conversion target so that neutrons generated by the neutron conversion target are emitted in one direction.

4. The neutron imaging device according to claim 2, wherein the data processing apparatus is further configured to obtain the images of the object being inspected under the neutrons of different energy spectrums based on a time-of-flight method, with a time at which a pulse X-ray is generated by the high-energy electron linear accelerator being used as a reference.

5. The neutron imaging device according to claim 1, wherein the neutron detector comprises a neutron-sensitive micro-channel plate detector.

6. The neutron imaging device according to claim 2, wherein the filter comprises a material having a smaller cross section for neutrons and a larger cross section for photons.

7. The neutron imaging device according to claim 6, wherein the filter comprises beryllium or lead.

8. The neutron imaging device according to claim 2, wherein the neutron conversion target is heavy water.

9. The neutron imaging device according to claim 1, wherein the time of flight of the neutrons of different energy spectrums is calculated according to a formula below:

$$t = \frac{L}{\sqrt{2E_n / m_n}}$$

where L denotes a distance of flight, $E_n$ denotes an energy level of neutron, and $m_n$ denotes a rest mass of neutron.

10. The neutron imaging device according to claim 2, wherein the collimator is evacuated.

11. An imaging method comprising:

generating a continuous energy spectrum neutron beam;
receiving, by a neutron detector, the neutron beam which penetrates an object being inspected to obtain an electrical signal;

converting the electrical signal into a digital signal; and
obtaining images of the object being inspected under neutrons of different energy spectrums based on the digital signal.

12. The imaging method according to claim 11, wherein the images of the object being inspected under the neutrons of different energy spectrums is obtained based on a time-of-flight method, with a time at which a pulse X-ray is generated by a high-energy electron linear accelerator being used as a reference

13. A neutron generation apparatus comprising:

a high-energy electron linear accelerator configured to generate an X-ray;
a neutron conversion target which is bombarded by the X-ray to generate a neutron beam;
a filter arranged downstream of the neutron conversion target and configured to filter the X-ray included in the neutron beam and generating the continuous energy spectrum neutron beam; and
a collimator arranged downstream of the filter and configured to collate the filtered neutron beam so as to generate the continuous energy spectrum neutron beam which is emitted in one direction.

14. The neutron generation apparatus according to claim 13, further comprising:

a moderating reflector configured to surrounding at least partly the neutron conversion target so that neutrons generated by the neutron conversion target are emitted in one direction.

15. The neutron generation apparatus according to claim 13, wherein the filter comprises material having a smaller cross section for neutrons and a larger cross section for photons.

FIG. 1

FIG. 2

FIG. 3

FIG. 4

FIG. 5

Europäisches
Patentamt

European
Patent Office

Office européen
des brevets

# EUROPEAN SEARCH REPORT

Application Number

EP 17 19 0833

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2007/096036 A1 (KANG KEJUN [CN] ET AL) 3 May 2007 (2007-05-03) | 1-3,6-8, 10,11, 13-15 | INV. G01T3/00 |
| Y | * paragraphs [0039], [0045], [0046], [0049] * <br> * figures 1,3 * | 4,5,9,12 | |
| Y | US 2015/185164 A1 (CHEN ZHIQIANG [CN] ET AL) 2 July 2015 (2015-07-02) <br> * paragraphs [0021], [0029] * <br> * figures 1-4 * | 4,9,12 | |
| Y | KNAUER J P ET AL: "Neutron time-of-flight measurements on the national ignition facility", PLASMA SCIENCE (ICOPS), 2011 ABSTRACTS IEEE INTERNATIONAL CONFERENCE ON, IEEE, 26 June 2011 (2011-06-26), page 1, XP032035893, DOI: 10.1109/PLASMA.2011.5992961 ISBN: 978-1-61284-330-8 | 5 | |
| A | * the whole document * | 1,11 | TECHNICAL FIELDS SEARCHED (IPC) G01T H05H |

The present search report has been drawn up for all claims

| Place of search | Date of completion of the search | Examiner |
|---|---|---|
| The Hague | 5 February 2018 | Wulveryck, J |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 17 19 0833

This annex lists the patent family members relating to the patent documents cited in the above-mentioned European search report.
The members are as contained in the European Patent Office EDP file on
The European Patent Office is in no way liable for these particulars which are merely given for the purpose of information.

05-02-2018

| Patent document cited in search report | Publication date | Patent family member(s) | Publication date |
|---|---|---|---|
| US 2007096036 A1 | 03-05-2007 | AU 2006200561 A1 | 17-05-2007 |
| | | BE 1017033 A3 | 04-12-2007 |
| | | CN 1959387 A | 09-05-2007 |
| | | DE 102006023309 A1 | 24-05-2007 |
| | | FR 2892816 A1 | 04-05-2007 |
| | | GB 2432094 A | 09-05-2007 |
| | | JP 2007127617 A | 24-05-2007 |
| | | KR 20070048107 A | 08-05-2007 |
| | | RU 2305829 C1 | 10-09-2007 |
| | | US 2007096036 A1 | 03-05-2007 |
| | | WO 2007051418 A1 | 10-05-2007 |
| US 2015185164 A1 | 02-07-2015 | CN 104754852 A | 01-07-2015 |
| | | HK 1212139 A1 | 03-06-2016 |
| | | US 2015185164 A1 | 02-07-2015 |
| | | WO 2015096778 A1 | 02-07-2015 |

EPO FORM P0459

For more details about this annex : see Official Journal of the European Patent Office, No. 12/82